# EUROPÄISCHE PATENTSCHRIFT

(11) **EP 0 885 647 B1**
(45) Veröffentlichungstag und Bekanntmachung des Hinweises auf die Patenterteilung: **17.09.2003**
(21) Anmeldenummer: 98890174.0
(22) Anmeldetag: 10.06.1998
(51) Int. Cl.: B01D 53/32, F01N 3/08, B01J 19/08, B01D 53/92

(54) **Vorrichtung zur Dissoziation von im Abgas von Verbrennungskraftmaschinen enthaltenen Stickstoffoxiden**
Apparatus for the dissociation of nitrogen oxides in exhaust gas from combustion engines
Dispositif pour la dissociation d'oxydes d'azote dans le gaz d'échappement de moteurs à combustion

(30) Priorität: 17.06.1997 AT 36897 U
(43) Veröffentlichungstag der Anmeldung: 23.12.1998
(73) Patentinhaber: Fleck, Carl Maria, Prof. Dr., 2391 Kaltenleutgeben (AT)
(72) Erfinder: Fleck, Carl Maria, Prof. Dr., 2391 Kaltenleutgeben (AT)
(74) Vertreter: KLIMENT & HENHAPEL

(56) Entgegenhaltungen:
- EP-A- 0 366 876
- WO-A-94/06543
- WO-A-97/05369
- WO-A-98/00221
- WO-A-98/02233
- DE-C- 19 518 970
- US-A- 4 945 721
- PATENT ABSTRACTS OF JAPAN vol. 018, no. 520 (C-1255), 30.September 1994 & JP 06 178914 A (MITSUBISHI HEAVY IND LTD), 28.Juni 1994,
- DINELLI G ET AL: "INDUSTRIAL EXPERIMENTS ON PULSE CORONA SIMULTANEOUS REMOVAL OF NOX AND SO2 FROM FLUE GAS" IEEE TRANSACTIONS ON INDUSTRY APPLICATIONS, Bd. 26, Nr. 3, 1.Mai 1990, Seiten 535-541, XP000148210

## Beschreibung

Die Erfindung betrifft eine Vorrichtung zur Dissoziation von Stickstoffoxiden gemäß Oberbegriff des Anspruchs 1.

In der EP 0332609 ist ein Dieselfilter zur "kalten Verbrennung" von Rußteilchen offenbart, der aus einem kreisringförmigen Keramikkörper besteht, dessen Innenfläche eine Hochspannungselektrode und dessen Außenfläche ein zweite Elektrode, die mit Masse verbunden ist, umfaßt. Der Keramikkörper, der einen hohen spezifischen elektrischen Widerstand aufweist, sowie von parallel zueinander verlaufenden Kanälen durchsetzt ist, die an beiden Seiten offen sind und vom Abgas durchströmt werden, wird durch Anlegen einer Spannung von bis zu 34 kV erwärmt, während sich die Rußpartikel an den Wänden der Kanäle ablagern und so verbrannt werden. Diese bekannte Anordnung ist zwar im Zusammenhang mit der Reduktion von Ruß im Abgas einer Verbrennungskraftmaschine wirksam, eignet sich jedoch nicht zur Reduktion von Stickstoffoxiden im Abgas.

In der WO 97/05369 ist eine Vorrichtung offenbart, bei der das Abgas eines Verbrennungsmotors, insbesonders eines Dieselmotors, durch einen Entladungsraum geleitet wird, wobei sich dieser zwischen zwei Elektroden befindet, die ein elektrisches Feld mit einer Feldstärke zwischen 5 kV/cm und 20 kV/cm erzeugen. Dabei werden an der Begrenzung des Entladungsraumes Elektronen aus der mit einer keramischen Ummantelung versehenen Hochspannungselektrode erzeugt, die eine gewisse kinetische Energie besitzen (abhängig von der Feldstärke) und diese über Stöße an die vorhandenen NOₓ Moleküle übertragen, wodurch das Stickstoffoxid dissoziert wird. Der Nachteil dieser Methode ist die notwendige Beschränkung der eingesetzten Feldstärke, um die Bildung von sogenannten Streamern (Vorfunken) zu verhindern, die zu einer Ionisation und Dissoziation der Stickstoff- und Sauerstoffmoleküle führt und in weiterer Folge zur Bildung von sekundärem Stickstoffoxid. Die Elektronenproduktion wird daher nur auf den Randbereich des Entladungsraumes begrenzt. Die physikalische Erklärung dafür ist, daß eine Elektronenenergie ab 3 eV eine Dissoziation der vorhandenen Stickstoff- und Sauerstoffmoleküle bewirkt und diese sich wieder zu sekundärem Stickstoffoxid verbinden, was den Wirkungsgrad der Vorrichtung erheblich senkt. Bei einer etwaigen Ionisierung durch Streamer entstehen Elektronen mit einer Energie von mindestens 12 eV, was wiederum zur Dissoziation der vorher genannten Moleküle führt.

Die Aufgabe der vorliegenden Erfindung besteht nun in der Schaffung einer Vorrichtung, die es erlaubt, Stickstoffoxide unter Verwendung wesentlich höherer Feldstärken zu dissozieren, ohne daß sich durch Dissoziation von Stickstoff- oder Sauerstoffmolekülen sekundäre Stickstoffoxide bilden, sowie in der wirksamen Verhinderung der Bildung von Streamern.

Diese Aufgabe wird bei einer Vorrichtung der eingangs erwähnten Art durch die kennzeichnenden Merkmale des Anspruchs 1 erreicht.

Die Verwendung eines Keramischen Wabenkörpers (= Monolith) innerhalb des Entladungsraumes gemäß Anspruch 1 ermöglicht den Einsatz einer Gleichstromentladung in Form einer Barriereentladung mit einem elektrischen Feld dessen Feldstärke bis zu 100 kV/cm erreicht. Die üblicherweise auftretenden Schwierigkeiten beim Kontrollieren einer Gleichstromentladung mit hoher Feldstärke wird durch die erfindungsgemäße Vorrichtung beseitigt. Die Ausführung des kreisringförmigen Keramischen Wabenkörpers gemäß Anspruch 1 bis 3 bewirkt, daß das Entladungs- und Beschleunigungsvolumen der Elektronen durch eine Vielzahl von Kanälen des Keramischen Wabenkörpers wabenartig dargestellt wird. Durch die sich dabei ergebende mittlere freie Weglänge von 10⁻⁵ cm und der geforderten maximalen Elektronenenergie von 3 eV, vorzugsweise 1 eV können Feldstärken bis zu 100 kV/cm eingesetzt werden, ohne daß sich Streamer bilden und Stickstoff- oder Sauerstoffmoleküle dissoziert werden. Diese Anordnung stellt durch den Keramikwiderstand eine Vielzahl in Serie geschalteter Barrieren dar, durch die kein geschlossener Streamer oder Funke durchzünden kann. Falls doch ein Funke entstehen sollte, so bleibt er auf einen Kanal beschränkt und wirkt sich somit auf den Gesamtwirkungsgrad der Anlage nicht aus.

Anspruch 4 bewirkt, daß der die Hochspannungselektrode aufnehmende, zylinderförmige Innenraum komplett isoliert und abgeschlossen ist.

Anspruch 5 verhindert ein Durchschlagen der Spannung bei hohen Feldstärken und stellt eine Elektronenquelle zur Verfügung, wobei die Elektronen aus der Keramik durch die hohen Feldstärken herausgerissen werden.

Gemäß Anspruch 6 reduziert sich die freie Weglänge der Elektronen im Feld und ermöglicht somit den Einsatz hoher Feldstärken ohne eine Elektronenenergie von 1 eV zu überschreiten.

Anspruch 7 bis 9 verhindert zusätzlich das Durchzünden eines Funken und bewirkt eine gleichmäßige Verteilung des Stromes innerhalb des Monolithen.

Die Kombination der erfindungsgemäßen Vorrichtung mit einem vorgeschalteten Rußfilter bekannter Art gemäß Anspruch 10 und 11 ermöglicht die gleichzeitige Reinigung des Abgases von Rußteilchen und Stickstoffoxiden.

Aus demselben Grund erfolgt die Zuleitung des Stromes zu den Hochspannungselektroden gemäß Anspruch 12.

Die Elektronen zur Dissoziation der Stickstoffoxide werden in den Kanälen an der negativen Wand bei den vorhandenen hohen Feldern durch Feldemission aus der rauhen Keramikoberfläche und bei höheren Temperaturen auch durch thermisch induzierte Emissionen (Richardson-Effekt) erzeugt. Die mathematische Formulierung des Richardson-Effektes enthält im Exponenten einen die Austrittsarbeit reduzierenden Feldterm, der mit wachsendem Feld den Richardson-Effekt bereits bei tieferen Temperaturen begünstigt und so die Richardson-Emission und die Feldemission ineinander überführt. Weitere Elektronenemissionen aus der Keramik können durch Quanten, die durch inelastische Stöße oder Bremsstrahlung erzeugt werden, oder durch positive Atomrümpfe, die durch das Elektronenbombardement fallweise aus der positiven Wand herausgeschlagen werden und auf die negative Wand hin beschleunigt werden, ausgelöst werden. Das Merkmal des Anspruchs 13 gewährleistet deshalb eine geringe Elektronenaustrittsarbeit der Elektronen aus der Keramik.

Auch die Erhöhung der Oberflächenrauhigkeit in den Kanälen des Monolithen, bewirkt durch das hohe lokale Feld an den Spitzen (um den Faktor 2 bis 5 vergrößert) eine Verbesserung der Elektronenemission.

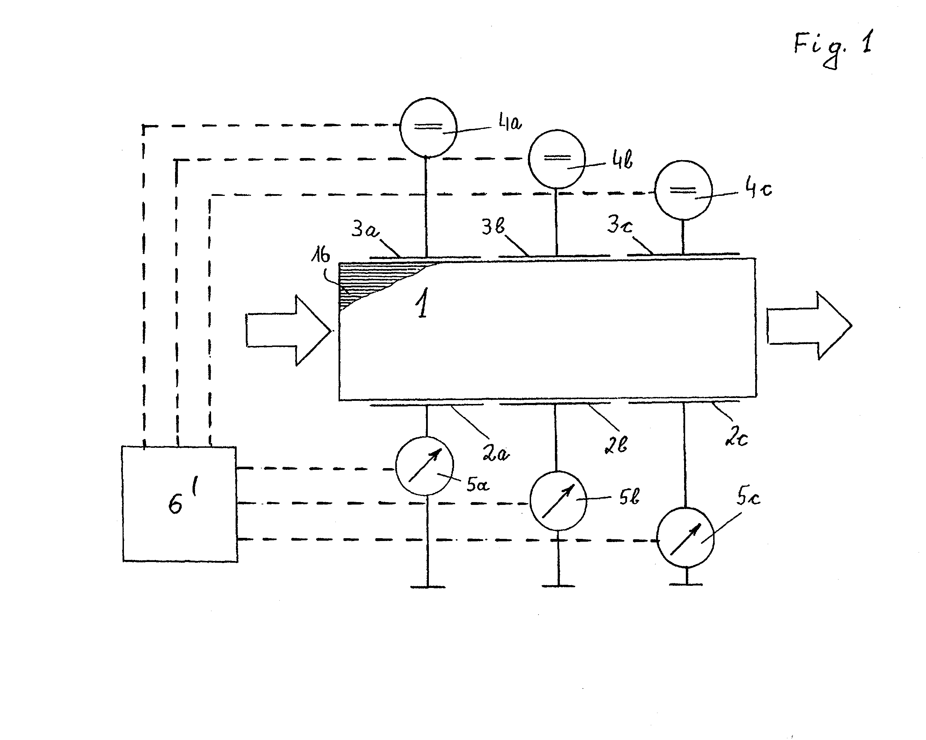

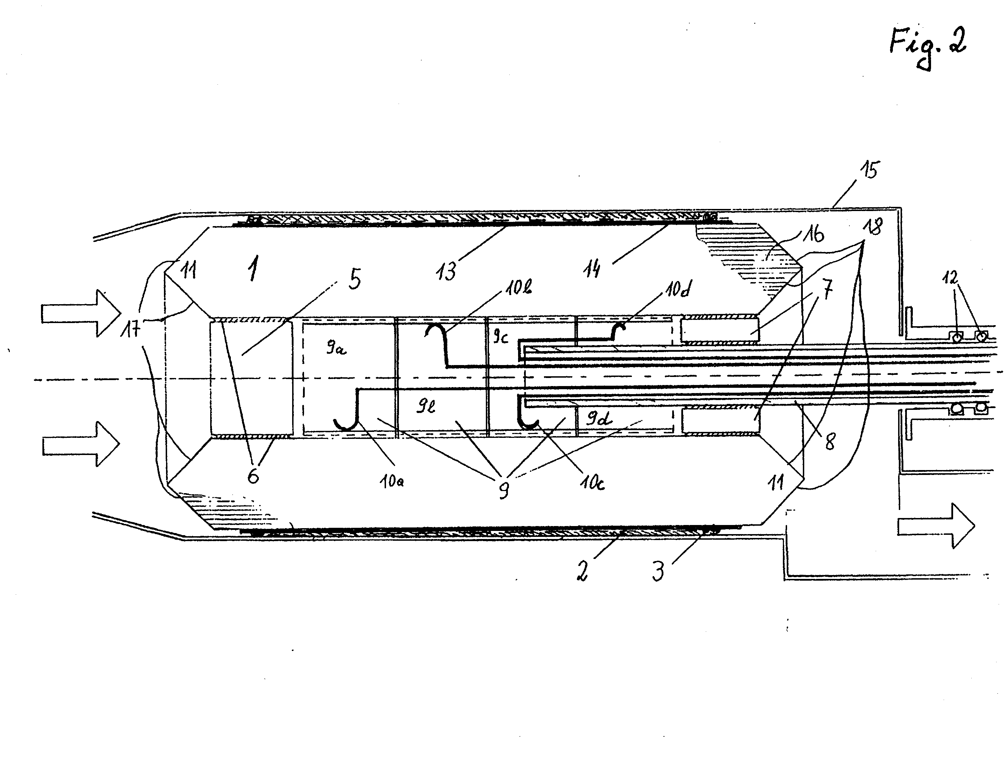

Im folgenden wird die Erfindung an Hand der in den Figuren 1 und 2 beschriebenen Ausführungsbeispiele näher beschrieben.

Dabei zeigen:
Fig. 1 einen Längsschnitt durch einen erfindungsgemäßen Plasmakatalysator mit kubischem Querschnitt
Fig. 2 einen Längsschnitt durch einen erfindungsgemäßen Plasmakatalysator mit zylindrischer Form in einem zylindrischen Metallgehäuse

Fig.1 zeigt einen Längsschnitt durch einen erfindungsgemäßen Plasmakatalysator aus einem keramischen Wabenkörper 1 in kubischer Form, der auf zwei zueinander im wesentlichen parallelen Begrenzungsflächen je drei einander gegenüberliegende, im wesentlichen gleich große Elektroden 2a und 3a, 2b und 3b, 2c und 3c aufweist. Während die hochspannungsseitig liegenden Elektroden 3a bis 3c durch entsprechende Generatoren 4a bis 4c mit Hochspannung versorgt sind, wird der Strom an den an Masse liegenden Elektroden 2a bis 2c mit entsprechenden Meßgeräten 5a bis 5c elektronisch erfaßt und einem Komparator 6' zugeleitet. Dieser vergleicht die durch gleich große Bereiche des Wabenkörpers 1 fließenden Ströme miteinander und stellt fest, ob einer der Ströme vom Mittelwert nach oben abweicht. Ist dies der Fall, so wird in dem entsprechenden Generator die Hochspannung sehr schnell so lange nach unten geregelt, bis der Ausreißer wieder dem Mittelwert angepaßt ist.

Die von den Generatoren 4a bis 4c erzeugten Hochspannungen sind so geregelt, daß bei steigenden Abgastemperaturen die Ströme bzw. die aus dem Bordnetz des Fahrzeugs entnommene Leistung eine vorgegebene Größe nicht übersteigt. Beträgt die Hochspannung beim Kaltstart für einen in Feldrichtung 40 mm messenden Wabenkörper etwa 100 kV bei einem Gesamtstrom von 0,5 mA, so nimmt der Strom bald nach dem Start des Motors zu, sodaß die Leistung bei einem Stromfluß von etwa 2 mA durch Abregeln der Hochspannung auf etwa 80 kV begrenzt wird. Bei noch höheren Abgastemperaturen beginnt die Volumenleitung in dem keramischen Monolithen zuzunehmen und die Hochspannung muß weiter reduziert werden. Dies hat zur Folge, daß der Wirkungsgrad der Stickstoffdissoziation abnimmt. Die Temperatur des Abgases im Abgasstrang muß daher vor dem Plasmakatalysator durch Maßnahmen wie Kühlrippen an der Rohrleitung oder eine zweiflutige Ausführung niedrig gehalten werden.

Fig. 2 zeigt einen Längsschnitt durch einen erfindungsgemäßen Plasmakatalysator, der aus einem zylindrischen, keramischen Wabenkörper 1 mit kreisringförmigen Querschnitt besteht und mit entsprechenden Quellmatten 2 und netzförmigen Abschlußgitter 3 aus einem Stahlgeflecht in einem zylindrischen Metallgehäuse 15 eingebettet ist. Der zylinderförmige Innenraum des Keramikkörpers ist durch eine leitende Kontaktierung als Hochspannungselektrode ausgebildet, wogegen die äußere Zylinderfläche des Keramikkörpers durch eine ebensolche Kontaktierung, die mit dem Erdpotential verbundene Elektrode darstellt. Der stromaufwärts liegende Eingang des durch den inneren Zylindermantel gebildeten Hohlraumes ist durch einen mittels keramischen Zement 6 in diesem Hohlraum befestigten Keramikstopfen 5 verschlossen. Das stromabwärts befindliche Ende des Hohlraumes ist mit einem keramischen Stopfen 7 verschlossen, der eine Bohrung aufweist, in die ein keramisches Rohr 8 mittels keramischen Zement befestigt ist. Die Durchführung des Rohres 8 durch das Metallgehäuse 15 erfolgt durch O-Ringdichtungen 12 gasdicht. Durch dieses Rohr 8 erfolgt die Zuführung der elektrischen Spannung von außen zur Hochspannungselektrode 9, die vorzugsweise in vier voneinander elektrisch getrennte, zylinderförmige Segmente 9a, 9b, 9c und 9d geteilt ist.

Die Zuführung der elektrischen Spannung zu den vier Elektrodensegmenten 9a bis 9d erfolgt über Stahldrähte 10a bis 10d für jeden Elektrodenteil einzeln, wobei die Stahldrähte durch viermal durchbrochene Keramikscheiben (in der Zeichnung nicht ersichtlich) auf Distanz gehalten werden.

Die Kontaktierung des Monolithen auf der geerdeten Seite erfolgt über einen Positiven-Temperatur-Kennlinien-Widerstand (PTK-Wiederstand) 13, der nach außen mit einer Metallkontaktierung 14 versehen ist, die den Strom über die metallischen Abschlußgitter 3 an das Stahlgehäuse weiterleitet.

Durch die getrennte Zuführung der Spannungsversorgung mittels Stahldrähte 10a bis 10d zu den Hochspannungselektrodenteilen 9a bis 9d lassen sich die Querströme durch den Monolithen 1 miteinander Vergleichen und auf ähnliche Werte regeln. Dadurch läßt sich einerseits eine lokale Überhitzung des Monolithen 1, die durch zu kleine Gasgeschwindigkeiten des Abgases entstehen kann, verhindern und andererseits die Betriebsspannung dem bei starken Beschleunigungsvorgängen oder im Schubbetrieb auftretenden axialen Temperaturgradienten im Monolithen anpassen.

Der abgeschlossene Innenraum des Monolithen 1, sowie die gasdichte Zuführung der Spannungsversorgung 10a bis 10d an die Hochspannungselektrodenteile 9a bis 9d und die Verlängerung des Monolithen 1 mit kreisringförmigen Nasen 11 verhindert, daß die sehr hohe Betriebsspannung über die Ein- 17 und Austrittsfläche 18 des Monolithen gegen Erde schlägt.

Der PTK-Widerstand 13 auf der geerdeten Seite des Monolithen (1) trägt ebenfalls zur Gleichverteilung des durch den Monolithen fließenden Stromes bei, indem Gebiete mit erhöhtem Strom auch eine erhöhte Ohm'sche Leistung im PTK-Widerstand 13 und damit eine höhere Temperatur aufweisen, wodurch über die positive Temperaturkennlinie des PTK-Widerstandes 13 der Strom abgeregelt wird.

## Patentansprüche

1. Vorrichtung zur Dissoziation von im Abgas von Verbrennungskraftmaschinen enthaltenen Stickstoffoxiden, wobei das Abgas durch einen zwischen Elektroden befindlichen Entladungsraum geleitet wird, und in diesem Entladungsraum durch Anlegen eines elektrischen Feldes Elektronen erzeugt werden, **dadurch gekennzeichnet, daß** der Entladungsraum einen vom Abgas durchströmten Keramischen Wabenkörper (1) umfaßt und das elektrische Feld für den gesamten, Kanäle und Zwischenwände enthaltenden Keramikkörper dem Betrag nach zwischen 10 kV/cm und 100 kV/cm, vorzugsweise zwischen 15 kV/cm und 50 kV/cm liegt.

2. Vorrichtung nach Anspruch 1, **dadurch gekennzeichnet, daß** der Keramische Wabenkörper (1) eine kreisringförmige Gestalt hat, deren zylinderförmiger Innenraum durch eine leitende Kontaktierung als Hochspannungselektrode ausgebildet ist und die äußere Zylinderfläche des Keramischen Wabenkörpers durch eine ebensolche Kontaktierung die zweite, in der Nähe des Erdpotentials befindliche Elektrode darstellt.

3. Vorrichtung nach einem der Ansprüche 1 und 2, **dadurch gekennzeichnet, daß** der Keramische Wabenkörper (1) von parallel zueinander verlaufenden Kanälen (16) durchsetzt ist, die an beiden Seiten offen und von Abgasen durchströmt sind.

4. Vorrichtung nach einem der Ansprüche 1 bis 3, **dadurch gekennzeichnet, daß** der zylinderförmige Innenraum beidseitig durch in dem Keramischen Wabenkörper mit vorzugsweise keramischen Zement befestigte, keramische Stopfen (6, 7) verschlossen und abgedichtet ist, wobei die Hochspannung in einem geschlossenem keramischen Rohr oder einem thermisch ähnlich stabilen Isolator zugeführt wird.

5. Vorrichtung nach einem der Ansprüche 1 bis 4, **dadurch gekennzeichnet, daß** der Keramische Wabenkörper (1) aus einer dicht gebrannten Keramik, vorzugsweise aus Kordierit besteht.

6. Vorrichtung nach Anspruch 1 bis 5 **dadurch gekennzeichnet, daß** die im Querschnitt ziegelförmig angeordneten Kanäle (16) innerhalb des Keramischen Wabenkörpers (1) in Feldrichtung eine gegenüber der axialen Erstreckung geringe Ausdehnung besitzen.

7. Vorrichtung nach einem der Ansprüche 1 bis 6, **dadurch gekennzeichnet, daß** die Differenz der Radien des Kreisringzylinders (1) 25 mm bis 60 mm, vorzugsweise 30 mm bis 50 mm beträgt, seine axiale Ausdehnung vorzugsweise 200 mm bis 300 mm mißt und am Keramischen Wabenkörper (1) Spannungen zwischen 25 kV und 210 kV, vorzugsweise zwischen 45 kV und 150 kV anliegen.

8. Vorrichtung nach einem der Ansprüche 1 bis 7, **dadurch gekennzeichnet, daß** zwischen dem Keramischen Wabenkörper (1) und der inneren und/oder äußeren Elektrodenkontaktierung ein PTK Widerstand (13) angeordnet ist, dessen auf den Quadratzentimeter Elektrodenfläche bezogener Durchgangswiderstand zwischen 10 MOhm und 1000 MOhm, vorzugsweise zwischen 30 MOhm und 300 MOhm liegt.

9. Vorrichtung nach einem der Ansprüche 1 bis 8, **dadurch gekennzeichnet, daß** der PTK Widerstand (13) zwischen der Hochspannungselektrode (9) und der inneren Zylinderfläche bzw. zwischen der äußeren Kontaktierung (2,3) und der äußeren Zylinderfläche des Keramischen Wabenkörpers (1) seinen Durchgangswiderstand von Werten von etwa 10 bis 50 MOhm auf etwa 300 bis 1000 MOhm bezogen auf den Quadratzentimeter Elektrodenfläche erhöht, wenn seine Temperatur von 100°C auf 400°C bis 500°C steigt.

10. Vorrichtung nach einem der Ansprüche 1 bis 9, **dadurch gekennzeichnet, daß** dieser Vorrichtung ein Rußfilter vorgeschaltet ist.

11. Vorrichtung nach Anspruch 10 , **dadurch gekennzeichnet, daß** die innere und/oder äußere Kontaktierung des Keramischen Wabenkörpers (1) durch einen Metalloxid-Widerstand oder einem ähnlich temperaturfesten Widerstand durchgeführt wird, wobei die Zuleitung der elektrischen Anschlüsse (10a bis 10d) am strömungsseitig unteren Ende des Keramischen Wabenkörpers (1) erfolgt und der spezifische Widerstand ρ der Kontaktierung geteilt durch die Dicke d der Beschichtung, ρ/d zwischen 0,1 MOhm und 100 MOhm, vorzugsweise zwischen 1 MOhm und 10 MOhm liegt.

12. Vorrichtung nach einem der Ansprüche 1 bis 11, **dadurch gekennzeichnet, daß** die innere und/oder äußere Zuleitung der elektrischen Anschlüsse (10a bis 10d) zur Kontaktierung in der axialen Mitte oder in Strömungsrichtung gesehen nach der Mitte dieser Kontaktierung des Keramischen Wabenkörpers (1) erfolgt.

13. Vorrichtung nach einem der Ansprüche 1 bis 12, **dadurch gekennzeichnet, daß** der Keramische Wabenkörper (1) mit oder ohne haftfähigem Überzug (washcoat) durch Tauchen einen Überzug enthält, der sich durch besonders hohe Elektronenemissionen, d.h. durch besonders geringe Austrittsarbeit auszeichnet.

## Claims

1. An apparatus for the dissociation of nitrogen oxides contained in the exhaust gas of internal combustion engines, with the exhaust gas being guided through a discharge chamber disposed between electrodes and with electrons being produced in said discharge chamber by the application of an electric field, **characterized in that** the discharge chamber comprises a ceramic honeycomb body which is flowed through by the exhaust gas and the electric field has for the entire ceramic body containing channels and intermediate walls a strength of between 10 kV/cm and 100 kV/cm, preferably between 15 kV/cm and 50 kV/cm.

2. An apparatus as claimed in claim 1, **characterized in that** the ceramic honeycomb body (1) has a circular ring-like shape whose cylindrical inner chamber is arranged as a high-voltage electrode by means of a conductive contact and the outside cylinder surface of the ceramic honeycomb body represents the second electrode close to ground potential by such a similar contact.

3. An apparatus as claimed in one of the claims 1 and 2, **characterized in that** the ceramic honeycomb body is penetrated by channels (16) which extend parallel with respect to each other and which are open at either side and are flowed through by exhaust gases.

4. An apparatus as claimed in one of the claims 1 to 3, **characterized in that** the cylindrical inner chamber is closed off and sealed on either side by ceramic plugs (6, 7) which are fastened preferably by ceramic cement in the ceramic honeycomb body, with the high voltage being supplied in a closed ceramic tube or a thermally similar stable insulator.

5. An apparatus as claimed in one of the claims 1 to 4, **characterized in that** the ceramic honeycomb body (1) consists of a tightly fired ceramic material, preferably cordierite.

6. An apparatus as claimed in claim 1 to 5, **characterized in that** the channels (16) which are arranged in a brick-like fashion as seen in the cross section within the ceramic honeycomb body (1) have a low extension in the direction of the field relative to the axial extension.

7. An apparatus as claimed in one of the claims 1 to 6, **characterized in that** the difference of the radii of the circular ring cylinder (1) is 25 mm to 60 mm, preferably 30 mm to 50 mm, its axial extension is preferably 200 mm to 300 mm and voltages of between 25 kV and 210 kV, preferably between 45 kV and 150 kV, are applied to the ceramic honeycomb body (1).

8. An apparatus as claimed in one of the claims 1 to 7, **characterized in that** a PTC resistor (13) is arranged between the ceramic honeycomb body (1) and the inner and/or outer electrode contact, with the volume resistance of said PTC resistor relating to the electrode surface per square centimetre being between 10 megohms and 1000 megohms, preferably between 30 megohms and 300 megohms.

9. An apparatus as claimed in one of the claims 1 to 8, **characterized in that** the PTC resistor (13) between the high-voltage electrode (9) and the inner cylinder surface or between the outer contact (2,3) and the outer cylinder surface of the ceramic honeycomb body (1) increases its volume resistance from values of approximately 10 to 50 megohms to approx. 300 to 1000 megohms relating to the square centimetre of electrode surface when its temperature increases from 100°C up to 400°C to 500°C.

10. An apparatus as claimed in one of the claims 1 to 9, **characterized in that** an exhaust particulate filter is provided upstream of this apparatus.

11. An apparatus as claimed in claim 10, **characterized in that** the inner and/or outer contact of the ceramic honeycomb body (1) is implemented by a metal oxide resistor or a similar, temperature-resistant resistor, with the feed line of the electric connections (10a to 10d) is provided at the end of the ceramic honeycomb body (1) which is at the bottom in the direction of flow and the specific resistance ρ of the contact divided by the thickness d of the coating, ρ/d, lies between 0.1 megohms and 100 megohms, preferably between 1 megohm and 10 megohms.

12. An apparatus as claimed in one of the claims 1 to 11, **characterized in that** the inner and/or outer feed line of the electric connections (10a to 10d) is provided for contacting in the axial centre or, as seen in the direction of flow, after the centre of said contacting of the ceramic honeycomb body (1).

13. An apparatus as claimed in one of the claims 1 to 12, **characterized in that** the ceramic honeycomb body comprises a coating with or without adhesive coating (washcoat) by immersion, which coating is **characterized by** especially high electron emissions, i.e. by an especially low work of emission.

## Revendications

1. Dispositif pour la dissociation d'oxydes d'azote contenus dans le gaz d'échappement de moteurs à combustion, dans lequel on charge le gaz d'échappement à travers un espace de décharge se trouvant entre des électrodes, et on produit dans cet espace de décharge des électrons par application d'un champ électrique, **caractérisé en ce que** l'espace de décharge contient un corps à nids d'abeilles céramique (1) traversé par le gaz d'échappement et **en ce que** le champ électrique se situe par module pour l'ensemble des corps céramiques contenant les canaux et les parois intermédiaires entre 10 kV/cm et 100 kV/cm, de préférence entre 15 kV/ cm et 50 kV/cm.

2. Dispositif selon la revendication 1, **caractérisé en ce que** le corps à nids d'abeilles (1) a une forme de couronne, dont l'espace intérieur cylindrique est mis en forme d'un contact conducteur comme électrode à haute tension et la surface cylindrique extérieure représente au moyen d'un contact équivalent la deuxième électrode se trouvant au voisinage du potentiel de la terre.

3. Dispositif selon l'une des revendications 1 et 2, **caractérisé en ce que** le corps à nids d'abeilles (1) est parcouru de canaux (16) placés parallèlement les uns par rapport aux autres, qui sont ouverts des deux côtés et traversés par des gaz d'échappement.

4. Dispositif selon l'une des revendications 1 à 3, **caractérisé en ce que** l'espace intérieur cylindrique est fermé et rendu étanche des deux côtés au moyen de bouchons de céramique (6, 7) fixés dans les corps à nids d'abeilles avec de préférence du ciment céramique, moyen par lequel on introduit la haute tension dans un tuyau de céramique fermé ou dans un isolateur thermiquement stable de manière analogue.

5. Dispositif selon l'une des revendications 1 à 4, **caractérisé en ce que** le corps à nids d'abeilles (1) est constitué d'une céramique cuite étanche, de préférence de cordiérite.

6. Dispositif selon les revendications 1 à 5, **caractérisé en ce que** les canaux (16) placés en forme de brique en section transversale à l'intérieur du corps à nids d'abeilles (1) possèdent dans le sens du champ un faible allongement vis-à-vis de la direction axiale.

7. Dispositif selon l'une des revendications 1 à 6, **caractérisé en ce que** la différence des rayons du cylindre en forme de couronne (1) est de 25 mm à 60 mm, de préférence de 30 mm à 50 mm, sa longueur axiale mesure de préférence de 200 mm à 300 mm et des tensions entre 25 kV et 210 kV, de préférence entre 45 kV et 150 kV sont appliquées au corps à nids d'abeilles (1).

8. Dispositif selon l'une des revendications 1 à 7, **caractérisé en ce qu'**entre le corps à nids d'abeilles (1) et le contact d'électrode intérieur et/ou extérieur est disposée une résistance CTP (13), dont la résistance d'interconnexion rapportée à la surface d'électrode par centimètre carré se situe entre 10 Mohms et 1000 Mohms, de préférence entre 30 Mohms et 300 Mohms.

9. Dispositif selon l'une des revendications 1 à 8, **caractérisé en ce que** la résistance CTP (13) entre l'électrode à haute tension (9) et la surface cylindrique interne ou entre le contact externe (2, 3) et la surface de cylindre externe du corps à nids d'abeilles (1) augmente sa résistance de contact de valeurs d'environ 10 à 50 Mohms à environ 300 à 1000 Mohms par rapport à la surface d'électrode au centimètre carré, lorsque sa température monte de 100 °C à 400 °C jusqu'à 500 °C.

10. Dispositif selon l'une des revendications 1 à 9, **caractérisé en ce que** ce dispositif est connecté à un filtre à noir de carbone.

11. Dispositif selon la revendication 10, **caractérisé en ce que** le contact interne et/ou externe du corps à nids d'abeilles (1) est introduit à travers une résistance d'oxyde métallique ou une résistance résistante à la température de manière analogue, moyen par lequel l'introduction de la connexion électrique (10a à 10d), est réalisée à l'extrémité inférieure du corps à nids d'abeilles (1) du côté du courant et la résistance spécifique ρ du contact divisée par l'épaisseur d de la couche, ρ/d se situe entre 0,1 Mohm et 100 Mohms, de préférence entre 1 Mohm et 10 Mohms.

12. Dispositif selon l'une des revendications 1 à 11, **caractérisé en ce que** l'introduction interne et/ou externe des liaisons électriques (10a à 10d) est pour le contact dans le milieu axial ou dans la direction du courant réalisée après le milieu de ce contact du corps à nids d'abeilles (1).

13. Dispositif selon l'une des revendications 1 à 12, **caractérisé en ce que** le corps à nids d'abeilles (1) avec ou sans revêtement adhérent (washcoat) contient un revêtement au trempé, qui se distingue par des émissions électroniques particulièrement élevées, c'est-à-dire par un travail de sortie particulièrement faible.
